# FASCICULE DE BREVET EUROPEEN

(11) **EP 0 721 573 B1**
(45) Date de publication et mention de la délivrance du brevet: **04.06.1997**
(21) Numéro de dépôt: 95914380.1
(22) Date de dépôt: 17.03.1995
(51) Int. Cl.: G01F 11/02

(54) **DISPOSITIF DOSEUR DESTINE A DELIVRER DES DOSES UNITAIRES CONSTANTES**
DOSIERGERÄT ZUR ABGABE VON KONSTANTEN EINHEITLICHEN DOSEN
METERING DEVICE FOR DISPENSING CONSTANT UNIT DOSES

(30) Priorité: 21.03.1994 FR 9403278
(43) Date de publication de la demande: 17.07.1996
(73) Titulaire: LABCATAL, 92120 Montrouge (FR)
(72) Inventeur: BODIN, Jacques, F-92300 Levallois-Perret (FR); TABERLET, Jean-Philippe, F-74420 Boège (FR)
(74) Mandataire: L'Helgoualch, Jean
(86) Numéro de dépôt international: FR9500325
(87) Numéro de publication internationale: WO9525945

(56) Documents cités:
- EP-A- 0 505 299
- WO-A-90/05091
- FR-A- 1 341 579
- FR-A- 2 635 473

## Description

La présente invention concerne un dispositif doseur, et plus particulièrement un dispositif permettant de doser et délivrer une quantité prédéterminée d'un fluide sans intervention de gaz pulseur, utilisable en toutes positions, et pouvant s'adapter sur des conteneurs de formes diverses.

Dans de nombreux domaines, il est souvent nécessaire de pouvoir délivrer des doses précises de fluides ou liquides contenus dans un récipient adapté à cet effet, et dans le domaine pharmaceutique, en particulier, il est indispensable que la dose délivrée par le dispositif soit à la fois précise et constante, c'est-à-dire que le dispositif doit délivrer une dose prédéterminée, et cette dose doit rester identique, même après un nombre relativement élevé d'utilisations.

En outre, pour améliorer la fiabilité du dispositif doseur, et pour faciliter sa fabrication, il est souhaitable qu'il comporte un nombre aussi faible que possible de pièces constitutives.

Les doseurs utilisés couramment dans la technique comportent souvent un nombre important de pièces telles que clapet, ressort, poussoir, bouchon, etc. De plus, les doseurs doivent présenter une bonne étanchéité pour éviter que de l'air ou de l'eau ne s'introduise à l'intérieur du récipient et ne provoque une dégradation du produit ou de la composition qu'il contient, et cette étanchéité ne peut généralement être obtenue de manière satisfaisante que par l'adjonction d'éléments complémentaires tels que des bagues, des anneaux, des filtres ou des joints.

Ainsi, par exemple, le brevet EP-A-0.395.754 décrit un doseur adapté aux produits de viscosité relativement élevée, tels que des crèmes cosmétiques. Ce doseur est constitué par un bouchon vissé sur la sortie filetée d'un récipient cylindrique, comprenant une chambre d'expansion de volume variable communiquant avec l'intérieur du récipient par l'intermédiaire d'une soupape et d'un conduit.

Le brevet FR-A-2.676.714 concerne un récipient contenant un produit fluide à distribuer, muni d'un dispositif destiné à protéger le produit contenu dans le récipient après utilisation, en assurant une fermeture étanche sans qu'il soit nécessaire d'obturer le canal de sortie du produit par un capuchon. Dans une forme de réalisation, le récipient est un conteneur pressurisé muni d'une valve, dont l'actionnement provoque la sortie du fluide qui repousse une membrane élastique comportant un pointeau entouré d'ouvertures par lesquelles peut s'écouler le produit. Quand la valve est relâchée, la dépression ramène la membrane contre son support de telle sorte que le pointeau vient obturer l'orifice de sortie.

Un tel dispositif procure une bonne facilité d'utilisation, mais il ne peut assurer de manière fiable et répétitive la distribution d'une dose prédéterminée de produit.

Le brevet US-A-4.376.495 décrit un dispositif conçu pour procurer une dose ajustable d'un fluide contenu dans un récipient flexible, comprenant un piston creux se déplaçant dans le col du récipient, combiné à une valve autorisant le passage du fluide.

Le brevet FR-A-2.674.024 décrit un doseur simple, comprenant un nombre relativement faible de pièces constitutives. L'élément principal de ce doseur est essentiellement constitué par un bouchon contenant une pièce déformable élastique, percée en son centre d'un orifice partiellement fermé par un clapet, et comportant sur son bord une partie tubulaire adaptée à un capot en matériau rigide. Ce dispositif est adapté aux fluides utilisables notamment en cosmétique, mais ne peut convenir aux produits pharmaceutiques en raison du manque de précision de la dose délivrée, et du manque d'étanchéité de l'ensemble du dispositif.

En effet, dans le domaine des produits pharmaceutiques, les conditions de précision et de constance de la dose délivrée sont essentielles et doivent être impérativement respectées avec une très faible marge d'erreur, sans nuire à la facilité d'utilisation. De plus, l'étanchéité du récipient doseur doit être parfaite pour écarter tout risque de désamorçage, et aussi pour assurer la préservation du produit à distribuer se trouvant dans le récipient.

Ainsi, il est souhaitable de pouvoir disposer d'un dispositif doseur capable d'assurer en permanence une excellente étanchéité à l'air et à l'eau, de supporter une stérilisation à la chaleur ou par rayonnement, comportant un nombre réduit de pièces constitutives non métalliques, et pouvant procurer des doses unitaires prédéterminées avec une bonne précision (de l'ordre de + 5%) et avec une grande simplicité d'utilisation.

La présente invention a précisément pour objet un dispositif doseur répondant aux conditions indiquées ci-dessus, et évitant les inconvénients des dispositifs connus de la technique, et tout particulièrement un dispositif doseur permettant de distribuer des doses unitaires constantes, adapté à l'administration de produits pharmaceutiques sous forme de fluides. De plus, le dispositif doseur de l'invention est utilisable en toutes positions, sans nécessiter l'emploi d'un gaz pulseur.

Le dispositif doseur suivant la présente invention est du type comportant un récipient contenant le fluide à distribuer, et un poussoir creux délimitant un volume défini, monté mobile sur le récipient et communiquant avec lui, ainsi qu'un organe élastique reliant le poussoir au récipient, et il se distingue en ce que l'organe élastique est constitué par un anneau cylindrique déformable élastiquement, comportant au moins une valve susceptible d'obturer l'orifice de sortie du récipient, et est mis en place autour d'un cylindre fermé, de même axe que l'anneau cylindrique, solidaire du récipient.

D'autre part, le volume défini par l'intérieur du poussoir creux et l'anneau cylindrique déformable peut communiquer avec l'extérieur par un orifice de sortie obturable par une valve.

Suivant une forme de réalisation de l'invention, les deux valves précitées sont montées en opposition, c'est-à-dire que la valve montée sur l'anneau cylindrique déformable élastiquement est en position de fermeture quand on agit sur le poussoir contre la force de réaction de l'anneau cylindrique, tandis qu'elle est en position d'ouverture quand on relâche le poussoir qui revient vers sa position initiale sous l'action de l'anneau déformable élastiquement. Au contraire, la valve d'obturation de l'orifice de sortie du volume intérieur du poussoir est en position d'ouverture quand on agit sur le poussoir et en position de fermeture quand on relâche le poussoir.

Suivant une forme préférentielle de réalisation, la valve montée sur l'anneau cylindrique déformable est constituée par une lèvre flexible solidaire de l'anneau, l'ensemble anneau - lèvre étant monobloc. La base de la lèvre est située du côté du récipient, tandis que le bord de la lèvre est orienté vers le poussoir. Dans une forme préférentielle de réalisation, la lèvre présente une forme annulaire. En position de fermeture, la lèvre est appliquée contre le cylindre fermé solidaire du récipient.

De même, la valve de l'obturateur de l'orifice de sortie du volume intérieur du poussoir est constituée par une lèvre flexible appliquée contre un cylindre disposé dans l'axe de l'orifice de sortie, le bord de la lèvre étant orienté vers l'extérieur.

Ainsi, une simple pression sur le poussoir provoque le blocage de la lèvre flexible solidaire de l'anneau déformable et chasse le fluide se trouvant dans le volume intérieur du poussoir par l'orifice de sortie, en soulevant la lèvre de l'obturateur. Lorsque le poussoir est relâché, le mouvement inverse provoque la fermeture de la lèvre de l'obturateur et l'ouverture de la lèvre solidaire de l'anneau déformable. Ainsi, le fluide présent dans le récipient peut pénétrer dans le volume intérieur du poussoir, et il y reste jusqu'à ce que le poussoir soit à nouveau actionné.

De préférence, le diamètre extérieur de l'anneau cylindrique déformable, qui correspond au diamètre intérieur de l'orifice de sortie du récipient, est égal au double environ du diamètre du cylindre fermé de même axe autour duquel est placé l'anneau cylindrique déformable. D'autre part, l'épaisseur de l'anneau cylindrique représente au moins 75% de l'intervalle séparant le cylindre fermé de la paroi interne du poussoir, cet intervalle pouvant être obturé par la lèvre annulaire flexible solidaire de l'anneau.

Suivant une forme de réalisation de l'invention, le récipient comprend un col cylindrique sur lequel peut coulisser le poussoir creux. De préférence, le col cylindrique est à double paroi et le corps du poussoir creux peut coulisser entre les deux parois; cette disposition assure un meilleur guidage du poussoir.

Le coulissement du poussoir est limité par des moyens appropriés, permettant de définir un volume constant.

Le col cylindrique peut faire partie intégrante du récipient, mais, suivant une variante conforme à l'invention, il est également possible d'utiliser un récipient muni d'une ouverture sur laquelle peut être monté le col cylindrique, par vissage sur un filetage prévu dans l'ouverture du récipient, ou par emboîtement.

De même, la forme du récipient peut être adaptée en fonction des utilisations envisagées. En particulier, il peut être avantageux de prévoir un piston dans le fond du récipient pour maintenir une pression appropriée facilitant l'éjection du fluide qu'il contient.

Ainsi, dans le cas d'un dispositif doseur pour produits pharmaceutiques sous forme d'aérosol se trouvant dans un récipient pressurisé dont le volume est généralement compris entre 10 ml et 150 ml, par exemple, le volume de la dose expulsée à chaque pression est égal au volume intérieur du poussoir, qui peut être compris entre 50 µl et 5 ml environ.

Le dispositif doseur suivant l'invention permet d'assurer la distribution d'un nombre de doses généralement compris entre 20 et 100 doses, selon le volume du récipient, avec une précision de la dose de l'ordre de ± 5% en volume, sans désamorçage.

Les caractéristiques et avantages de la présente invention apparaîtront plus en détail dans la description suivante, relative à des modes préférentiels de réalisation, en référence aux dessins annexés, qui représentent :

La Figure 1 représente une vue en coupe longitudinale d'un récipient équipé d'un dispositif doseur conforme à l'invention, le poussoir étant en position relevée.

La Figure 2 représente le récipient de la Figure 1, le poussoir du dispositif doseur étant en position enfoncée.

La Figure représente une coupe longitudinale d'une variante de réalisation d'un dispositif doseur conforme à l'invention.

La Figure 4 représente une variante simplifiée du dispositif doseur de l'invention, en coupe longitudinale.

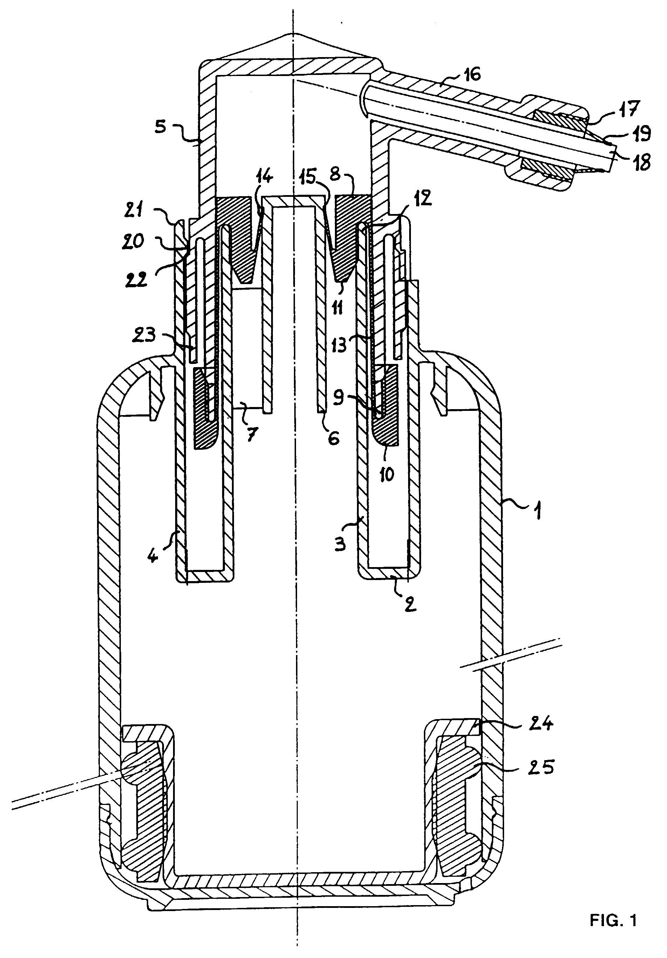

Comme le montre la Figure 1, l'ensemble du dispositif de l'invention se compose d'un récipient (1) comportant dans sa partie supérieure un élément cylindrique (2) à double paroi (3, 4) entre lesquelles peut coulisser un poussoir (5) de forme cylindrique appropriée. Le récipient (1) et le poussoir (5) sont de préférence réalisés dans un même matériau, par exemple du polypropylène.

Le cylindre (2) est ouvert à ses deux extrémités. Dans ce cylindre (2), est placé un deuxième cylindre (6) fermé à sa partie supérieure, de telle sorte que les deux cylindres (2) et (6) soient coaxiaux. Le cylindre intérieur (6) est fixé au cylindre principal (2) par des pattes de fixation (7) disposées dans l'espace annulaire séparant les deux cylindres. Une seule patte de fixation est représentée sur la Figure 1, mais le dispositif en comporte de préférence trois ou quatre.

Ainsi, le volume intérieur du récipient (1) communique avec l'intérieur du poussoir (5) par l'espace annulaire séparant les deux cylindres (2) et (6). Cet espace est cependant obturé par un anneau (8) réalisé en un matériau élastiquement déformable, par exemple en caoutchouc naturel ou synthétique, en un copolymère butadiène-styrène, en silicone, ou encore en caoutchouc nitrile.

L'anneau déformable (8) possède une forme sensiblement cylindrique et assure la liaison entre le corps du récipient (1) et le poussoir (5). Il est maintenu sur le bord inférieur (9) du poussoir (5) par un bourrelet (10) tandis qu'un deuxième bourrelet (11) assure la fixation sur le bord (12) de la paroi intérieure (3) de l'élément cylindrique (2).

Ainsi la partie intermédiaire cylindrique (13) de l'anneau déformable (8) assure une parfaite étanchéité entre le poussoir (5) et l'élément cylindrique (2). Au contraire, le bourrelet supérieur (11) est d'une épaisseur légèrement inférieure à l'espace entre la paroi interne du poussoir et le cylindre intérieur (6), ménageant ainsi un espace par lequel peut passer le fluide contenu dans le récipient (1).

L'anneau déformable (8) comporte une lèvre (14) flexible située sur la face interne du bourrelet supérieur (11), qui permet d'obturer l'espace séparant le bourrelet supérieur (11) du cylindre intérieur (6). L'extrémité de la lèvre (14) coopère avec une rainure (15) pratiquée dans la face du cylindre intérieur (6). La lèvre (14) est suffisamment flexible pour pouvoir s'écarter de la face du cylindre intérieur (6) sous l'action d'une pression dans le récipient (2) ou d'une dépression à l'intérieur du poussoir (5).

Le volume intérieur du poussoir (5) communique avec l'extérieur par le conduit (16) muni d'un obturateur (17) coopérant avec une tige cylindrique (18) placée dans l'axe du conduit (16). Cet obturateur (17) comporte une lèvre (19) susceptible de se soulever et de s'écarter de la tige (18) sous l'action du fluide sortant du récipient par le conduit (16). Dès que la pression du fluide se relâche, la lèvre (19) revient obturer la sortie du conduit (16) en s'appliquant par élasticité contre la tige (18), assurant ainsi la fermeture étanche du conduit et empêchant que de l'air ne pénètre à l'intérieur du poussoir (5).

Une nervure (20) formée sur la face interne de la paroi extérieure (21) du cylindre principal (2) faisant face à la paroi extérieure du poussoir (5) coopère avec un épaulement (22) prévu sur une languette annulaire (23) solidaire du poussoir, afin de limiter la course du poussoir et d'empêcher qu'il ne se déboîte à la fin du mouvement de remontée dans le cylindre principal. La languette (23) possède une flexibilité suffisante pour permettre la mise en place du poussoir (5) en force dans l'espace entre les deux parois du cylindre principal (2).

Le récipient comporte encore un piston (24) qui peut remonter le long de la paroi interne, ainsi qu'une bague d'étanchéité (25), qui peut être réalisée dans un matériau élastique tel que par exemple du caoutchouc nitrile, une silicone ou un élastomère thermoplastique.

Le fonctionnement du dispositif doseur conforme à la présente invention est indiqué ci-après.

En position initiale, avant la première utilisation, le dispositif est dans la position représentée sur la Figure 1. Lorsque l'utilisateur exerce une pression en appuyant sur le capot du poussoir (5) celui-ci descend en coulissant entre les deux parois du cylindre (2). Ce mouvement provoque un étirement de la partie intermédiaire (13) de l'anneau déformable (8). L'air se trouvant à l'intérieur du poussoir (5) se trouve chassé vers l'extérieur par le conduit (16) à travers l'obturateur (17) et en soulevant la lèvre (19). La pression de l'air dans le poussoir (5) maintient la lèvre annulaire (14) en position bloquée contre la paroi du cylindre intérieur (6), comme dans la position représentée sur la Figure 1, empêchant ainsi toute communication entre l'intérieur du récipient (1) et le volume intérieur du poussoir (5).

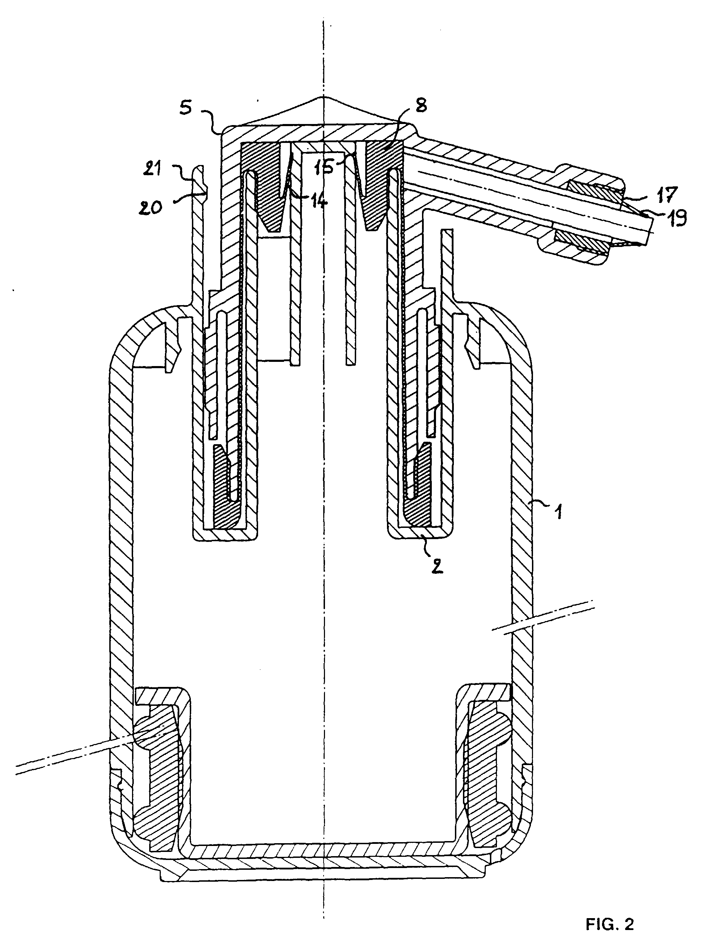

En fin de course, le poussoir (5) occupe la position représentée sur la Figure 2, la paroi interne du capot du poussoir étant alors contre la partie supérieure de l'anneau déformable (8).

Dès que l'on relâche la pression sur le capot du poussoir (5), celui-ci remonte en coulissant entre les deux parois du cylindre principal (2) sous l'action de ressort élastique de l'anneau déformable (8) qui tend à revenir dans sa position initiale. Dans ce mouvement, il se crée une légère dépression dans le volume intérieur du poussoir (5) dont la sortie est fermée par l'obturateur (17). Le fluide se trouvant dans le récipient (1), qui se trouve sous une pression supérieure, repousse alors la lèvre annulaire (14) et pénètre progressivement dans le volume intérieur du poussoir (5).

En fin de course de remontée du poussoir (5), celui-ci vient en butée contre la nervure (21) et le poussoir reprend donc exactement sa position initiale. La différence de pression entre l'intérieur du récipient (1) et le volume intérieur du poussoir (5) ayant diminué, la lèvre annulaire (14) revient prendre appui contre la paroi du cylindre intérieur (6), dans la rainure (15). Le volume délimité par le poussoir (5) contient alors une dose déterminée du fluide provenant du récipient (1), et cette dose est toujours la même à chaque mouvement du poussoir (5) entre ses deux positions extrêmes représentées sur les Figures 1 et 2 respectivement.

Cette dose de fluide est isolée de l'extérieur par l'obturateur (17) et de l'intérieur du récipient par la lèvre annulaire (14) de l'anneau déformable (8). Elle est alors prête à être administrée.

Une nouvelle pression sur le poussoir (5) provoque la sortie de la dose de fluide par le conduit (16) et à travers l'obturateur (17) en repoussant la lèvre (19). Lorsque le poussoir est en position enfoncée, comme représenté sur la Figure 2, toute la dose a été éjectée, à l'exception d'un faible volume se trouvant encore dans le conduit (16) mais ce volume est identique à chaque utilisation et la dose administrée n'est donc pas modifiée d'une utilisation à la suivante.

Lorsque la pression sur le poussoir (5) est relâchée, celui-ci remonte en coulissant entre les deux parois du cylindre principal (2) comme indiqué ci-dessus, et une nouvelle dose de fluide pénètre dans le volume intérieur du poussoir. A chaque utilisation, la dose de fluide est identique, son volume étant égal au volume intérieur du poussoir en position relevée, limitée par la butée (21).

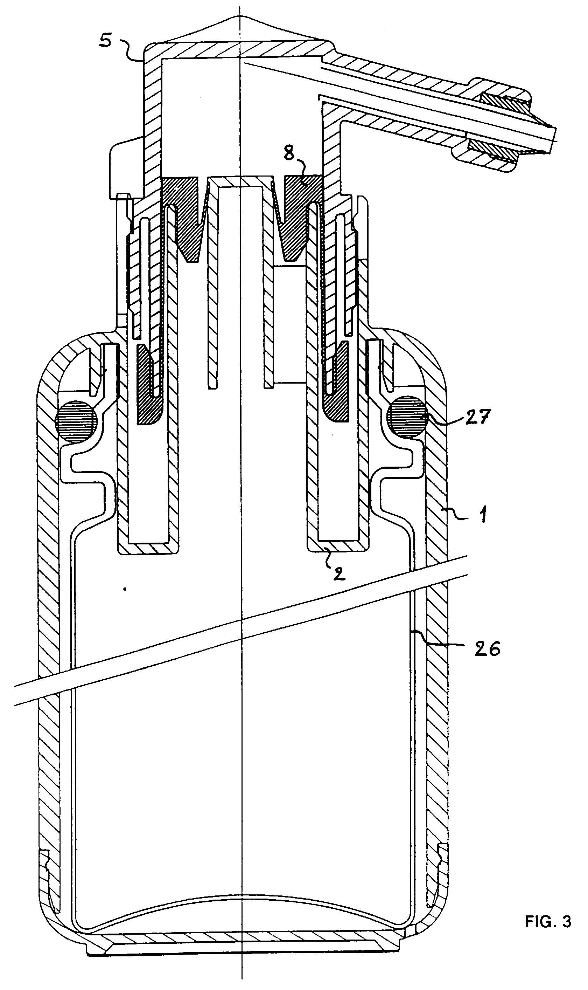

La variante de réalisation représentée sur la Figure 3 comporte le même anneau déformable (8) et le même poussoir (5). Le fluide à distribuer en doses unitaires est dans ce cas maintenu dans le conteneur souple (26) mis en place à l'intérieur du récipient et l'étanchéité est assurée par une bague complémentaire (27) en caoutchouc nitrile ou en silicone, placée dans la partie supérieure du récipient (1), entre la paroi et le cylindre principal (2). Cette forme simplifiée évite l'utilisation d'un piston (24). Le conteneur souple (26), ou poche, est réalisé en matériau thermoplastique, et de préférence en polyéthylène ou en polypropylène.

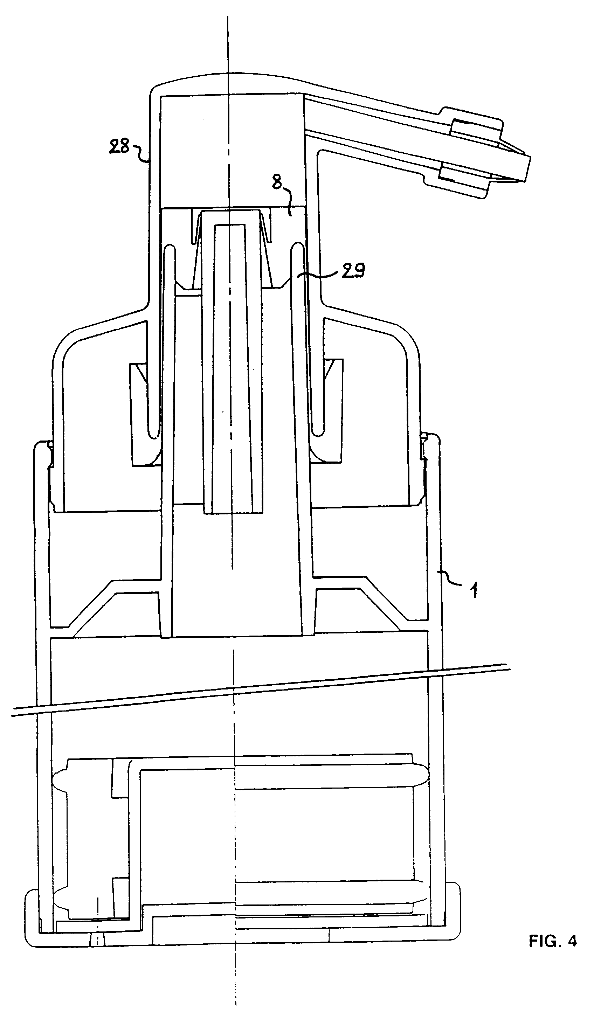

Le dispositif doseur représenté sur la Figure 4 est une variante simplifiée de celui de la Figure 1 dont il reprend les éléments principaux, c'est-à-dire le récipient (1) et l'anneau annulaire déformable (8). Le poussoir (28) coulisse dans ce cas entre les parois du récipient (1) et le cylindre principal (29) qui est à paroi simple.

L'invention a été décrite ci-dessus dans l'exemple d'un dispositif doseur utilisable pour des produits pharmaceutiques, mais bien entendu elle est applicable dans tous les domaines où il est nécessaire de distribuer des doses précises et constantes de fluide.

## Revendications

1. Dispositif doseur destiné à distribuer des doses unitaires constantes d'un fluide contenu dans un récipient (1), comportant un poussoir creux (5) délimitant un volume défini, monté mobile sur le récipient (1), et communiquant avec lui, ainsi qu'un organe élastique reliant le poussoir au récipient, caractérisé en ce que l'organe élastique est constitué par un anneau cylindrique (8) déformable élastiquement, comportant au moins une valve (14) susceptible d'obturer l'orifice de sortie du récipient, et est mis en place autour d'un cylindre fermé (6), de même axe que l'anneau cylindrique, solidaire du récipient (1).

2. Dispositif doseur selon la revendication 1, caractérisé en ce que le poussoir (5) peut coulisser sur un col cylindrique (2) solidaire du récipient (1).

3. Dispositif doseur selon la revendication 2, caractérisé en ce que le col cylindrique (2) est à double paroi, entre lesquelles peut coulisser le corps du poussoir creux (5).

4. Dispositif doseur selon l'une quelconque des revendications 1 à 3, caractérisé en ce que le diamètre extérieur de l'anneau cylindrique déformable (8) est égal au double environ du diamètre du cylindre fermé (6).

5. Dispositif doseur selon l'une quelconque des revendications 1 à 4, caractérisé en ce que l'épaisseur de l'anneau cylindrique déformable (8) représente au moins 75% de l'intervalle séparant le cylindre fermé (6) de la paroi interne du poussoir (5).

6. Dispositif doseur selon la revendication 1, caractérisé en ce que le volume délimité par la paroi interne du poussoir creux (5) et l'anneau cylindrique déformable (8) peut communiquer avec l'extérieur par un orifice de sortie (16) obturable par une valve (17).

7. Dispositif doseur selon la revendication 1, caractérisé en ce que la valve montée sur l'anneau cylindrique (8) déformable est constituée par une lèvre flexible (14) solidaire de l'anneau (8), appliquée contre le cylindre fermé (6) solidaire du récipient (1).

8. Dispositif doseur selon la revendication 7, caractérisé en ce que le cylindre fermé (6) solidaire du récipient (1) comporte une rainure (15) coopérant avec l'extrémité de la lèvre flexible (14).

## Claims

1. Metering device intended for dispensing constant unitary metered amounts of a fluid contained in a receptacle (1), including a hollow plunger (5) delimiting a defined volume, mounted so that it can move on the receptacle (1), and communicating with it, as well as an elastic member connecting the plunger to the receptacle, characterized in that the elastic member consists of an elastically deformable cylindrical collar (8), including at least one valve (14) capable of closing off the outlet orifice of the receptacle, and is fitted around a closed cylinder (6), having the same axis as the cylindrical collar, integral with the receptacle (1).

2. Metering device according to claim 1, characterized in that the plunger (5) may slide on a cylindrical neck (2) integral with the receptacle (1).

3. Metering device according to claim 2, characterized in that the cylindrical neck (2) is double-walled, between which walls the body of the hollow plunger (5) may slide.

4. Metering device according to any one of claims 1 to 3, characterized in that the outside diameter of the deformable cylindrical collar (8) is equal to approximately twice the diameter of the closed cylinder (6).

5. Metering device according to any one of claims 1 to 4, characterized in that the thickness of the deformable cylindrical collar (8) represents at least 75% of the gap separating the closed cylinder (6) from the internal wall of the plunger (5).

6. Metering device according to claim 1, characterized in that the volume delimited by the internal wall of the hollow plunger (5) and the deformable cylindrical collar (8) may communicate with the outside via an outlet orifice (16) which may be closed off by a valve (17).

7. Metering device according to claim 1, characterized in that the valve mounted on the deformable cylindrical collar (8) consists of a flexible lip (14) integral with the collar (8), pressed against the closed cylinder (6) integral with the receptacle (1).

8. Metering device according to claim 7, characterized in that the closed cylinder (6) integral with the receptacle (1) includes a groove (15) interacting with the end of the flexible lip (14).

## Patentansprüche

1. Dosiervorrichtung zum Abgeben konstanter Einheitsdosen eines in einem Behälter (1) enthaltenen Fluids, umfassend einen hohlen Drücker (5), der ein definiertes Volumen abgrenzt, beweglich auf dem Behälter (1) montiert ist und mit ihm kommuniziert, sowie eine elastische Einrichtung, die den Drücker mit dem Behälter verbindet, dadurch gekennzeichnet, daß die elastische Einrichtung aus einem elastisch verformbaren zylindrischen Ring (8) besteht, der zumindest ein Ventil (14) aufweist, das die Ausgangsöffnung des Behälters absperren kann, und um einen geschlossenen Zylinder (6) mit der gleichen Achse wie der zylindrische Ring angeordnet ist, der mit dem Behälter (1) einstückig verbunden ist.

2. Dosiervorrichtung nach Anspruch 1, dadurch gekennzeichnet, daß der Drücker (5) auf einem einstückig mit dem Behälter (1) verbundenen zylindrischen Hals (2) gleiten kann.

3. Dosiervorrichtung nach Anspruch 2, dadurch gekennzeichnet, daß der zylindrische Hals (2) doppelwandig ist, wobei dazwischen der Körper des hohlen Drückers (5) gleiten kann.

4. Dosiervorrichtung nach einem der Ansprüche 1 bis 3, dadurch gekennzeichnet, daß der Außendurchmesser des verformbaren zylindrischen Ringes (8) ungefähr doppelt so groß ist wie der Durchmesser des geschlossenen Zylinders (6).

5. Dosiervorrichtung nach einem der Ansprüche 1 bis 4, dadurch gekennzeichnet, daß die Dicke des verformbaren zylindrischen Ringes (8) zumindest 75% des Abstands beträgt, der den geschlossenen Zylinder (6) von der Innenwand des Drückers (5) trennt.

6. Dosiervorrichtung nach Anspruch 1, dadurch gekennzeichnet, daß das von der Innenwand des hohlen Drückers (5) und dem verformbaren zylindrischen Ring (8) begrenzte Volumen durch eine mit einem Ventil (17) absperrbare Ausgangsöffnung (16) mit außen bzw. mit der Außenumgebung kommunizieren kann.

7. Dosiervorrichtung nach Anspruch 1, dadurch gekennzeichnet, daß das auf dem verformbaren zylindrischen Ring (8) montierte Ventil aus einer mit dem Ring (8) einstückigen flexiblen Lippe (14) besteht, die gegen den mit dem Behälter (1) einstückigen geschlossenen Zylinder (6) anliegt.

8. Dosiervorrichtung nach Anspruch 7, dadurch gekennzeichnet, daß der mit dem Behälter (1) einstückige geschlossene Zylinder (6) eine Rille (15) aufweist, die mit dem Rand der flexiblen Lippe (14) zusammenwirkt.
